# EUROPÄISCHE PATENTANMELDUNG

(11) **EP 1 946 873 A1**
(43) Veröffentlichungstag der Anmeldung: **23.07.2008**
(21) Anmeldenummer: 07001072.3
(22) Anmeldetag: 18.01.2007
(51) Int. Cl.: B23H 1/04, B23H 1/06

(54) **Modular aufgebaute Erodierelektrode und Verwendung dieser**

(71) Anmelder: SIEMENS AKTIENGESELLSCHAFT, 80333 München (DE)
(72) Erfinder: Heretsch, Gereon, 14482 Potsdam (DE)

(57) **Zusammenfassung**

Erodierwerkzeuge, die länglich aufgebaut sind, sind oft teuer herzustellen, da sie aus einem Stück gefertigt werden.
Die Erfindung besteht darin, dass das Erodierwerkzeug modular aufgebaut wird, und mehrere separat montierte Erodiersegmente (7) umfasst.

## Beschreibung

Die Erfindung betrifft eine Erodierelektrode, die modular aufgebaut ist und deren Verwendung.

Erodierelektroden werden zur Bearbeitung von metallischen Bauteilen verwendet. Auch bei der Herstellung von Löchern wie Sack- oder Durchgangslöchern werden Erodierelektroden verwendet. Bei Turbinenschaufeln werden mittels dieses EDM-Verfahrens oft turbulierende Kühlluftbohrungen hergestellt.

Es ist Aufgabe der Erfindung ein Erodierwerkzeug aufzuzeigen, das kostengünstiger hergestellt und verwendet werden kann.

Die Aufgabe wird gelöst durch eine Erodierelektrode gemäß Anspruch 1 und deren Verwendung gemäß Anspruch 15, bei dem die Erodierelektrode aus mehreren Erodierelementen besteht.

Weitere vorteilhafte Maßnahmen sind in den Unteransprüchen aufgelistet, die miteinander kombiniert werden können, um weitere Vorteile zu erzielen.

Es zeigen
- Figur 1: ein zusammengebautes modulares Erodierwerkzeug,
- Figur 2, 3, 4, 5: Erodierelemente des modularen Erodierwerkzeugs,
- Figur 6: ein Anwendungsbeispiel zur Verwendung des modularen Erodierwerkzeugs,
- Figur 7: ein bearbeitetes Bauteil,
- Figur 8: eine Gasturbine,
- Figur 9: perspektivisch eine Turbinenschaufel und
- Figur 10: perspektivisch eine Brennkammer.

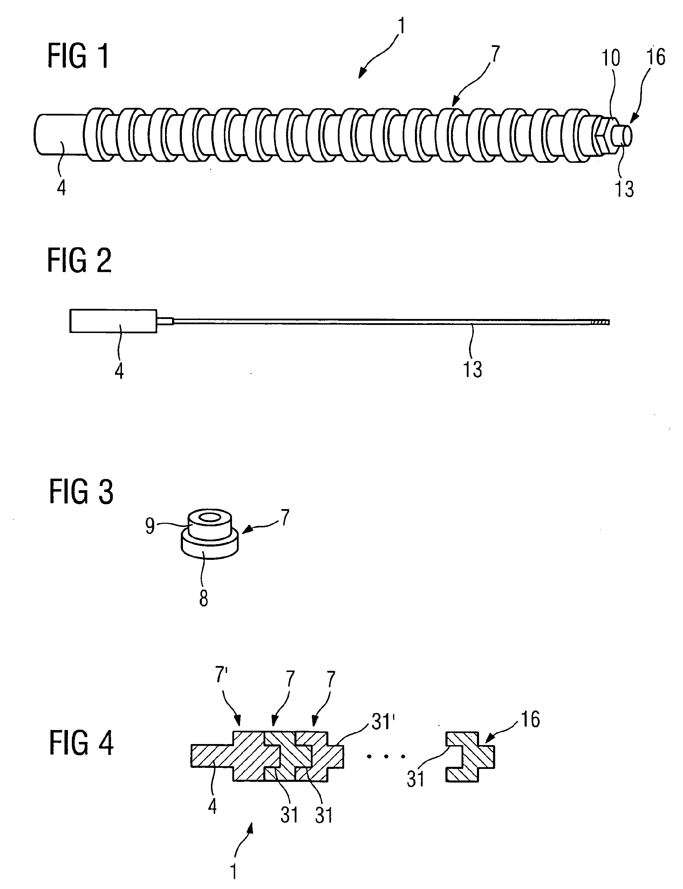

Die modular aufgebaute Erodierelektrode 1 (Fig. 1) umfasst als Bestandteil einen Stab 13, auf dem mehrere Erodiersegmente 7 aufgestapelt sind. Die Erodiersegmente 7 werden vorzugsweise auf dem Stab 13 durch Befestigungselemente 10, 4 gehalten.

Der Bereich des Erodierwerkzeugs 1, das als erstes zur Auflage oder in das zu bearbeitende Bauteil 120, 130, 155 eingeführt wird, also die Spitze darstellt, ist vorzugsweise in Form eines Dorns 4 ausgeführt (Fig. 1, 2, 4).
Das Material des Dorns 4 bzw. des Stabs 13 besteht vorzugsweise aus Werkzeugsstahl. Dazu werden bekannte Hartmetalle verwendet, um Schwingungen beim Einsatz der Erodierelektroden zu vermeiden.
Der Dorn 4 dient vorzugsweise zur Auflage der Erodiersegmente 7.

Die Erodiersegmente 7 weisen vorzugsweise Graphit auf. Vorzugsweise bestehen die Erodiersegmente 7 aus Graphit, 10 - 40 solcher Erodiersegmente sind auf einem Dorn 4 aufgefädelt. Die Erodiersegmente 7 werden vorzugsweise zwischen dem Dorn 4 und dem anderen Ende 16 des Stabs 13 eingespannt. Hier erfolgt dies vorzugsweise durch eine Spannmutter 10. Weitere Befestigungsmöglichkeiten sind denkbar.
Die Erodiersegmente 7 können jede beliebige Form aufweisen, um die gewünschte Geometrie herzustellen.

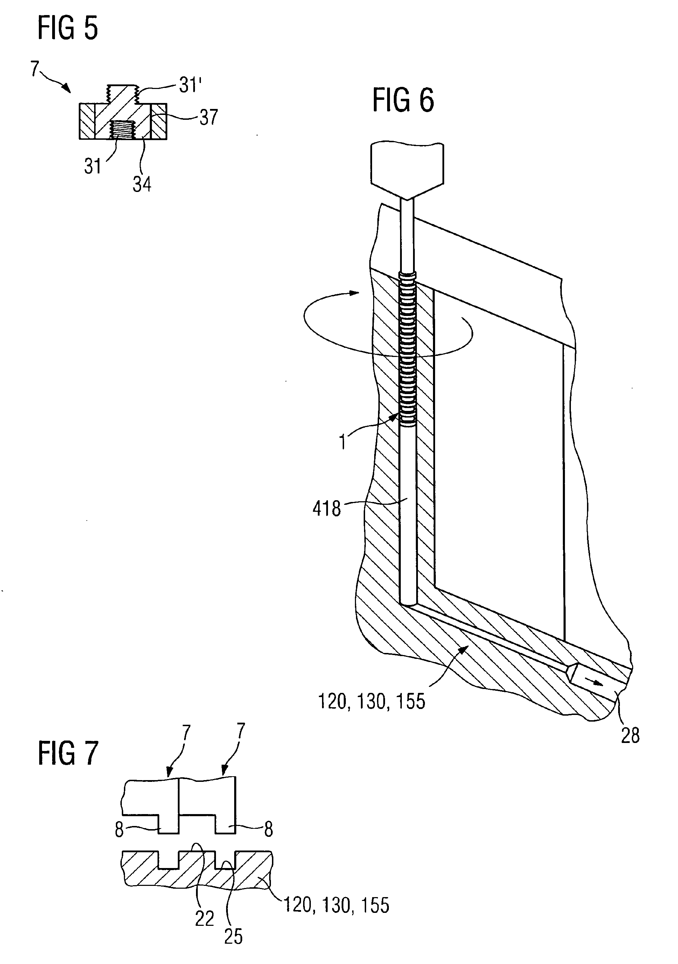

In Figur 3 ist ein Ausführungsbeispiel für ein Erodiersegment 7 gezeigt.
Dieses ist längs einer Längsachse (nicht dargestellt, parallel zum Stab 13) symmetrisch ausgebildet, insbesondere kreissymmetrisch, und besteht aus zwei Scheiben 8, 9, die verschiedene Außendurchmesser aufweisen und die insbesondere einteilig ausgebildet sind. Die Länge dieser Scheiben 8, 9 können variiert werden. Solche Erodiersegmente 7, wie sie in Figur 1 zu einem modularen Erodierwerkzeug zusammengefädelt sind, werden zum Erodiersenken verwendet. Dies ist in Figur 6 dargestellt, in der in ein bereits vorhandenes Loch die Erodierelektrode 1 eingeführt wird und das EDM-Verfahren bekanntermaßen aus dem Stand der Technik durchgeführt wird. Durch die verschiedenen Abstände der Erodiersegmente 7 zur Innenfläche innerhalb des Lochs 418 werden turbulierende Vertiefungen (Fig. 7) innerhalb eines Bauteils 120, 130 hergestellt, die im Einsatz ein vorbeiströmendes Medium in Turbulenz versetzen. Hier werden Erhebungen 22 und Vertiefungen 25 in dem Loch 418 oder einem Hohlraum erzeugt (Fig. 7). Gemäß Figur 6 kann Material, das beim Erodieren von dem Bauteil 120, 130 abgetragen wird, durch eine Saugspülung 28 aus dem Bauteil 120, 130 entfernt werden.

Figur 4 zeigt ein weiteres modular aufgebautes Erodierwerkzeug 1.
Die einzelnen Erodiersegmente 7 werden miteinander verbunden vorzugsweise miteinander verschraubt, d. h. sie 7 weisen ein Gewinde 31, 31'(nicht dargestellt) auf.

Dabei kann das Erodiersegment 7 vollkommen aus Graphit bestehen oder Graphit aufweisen.
Der Dorn 4 kann sich in seiner Form von den anderen Erodiersegmenten 7 unterscheiden und ein anders geformtes Erodierungssegment 7' darstellen. Dabei kann vorzugsweise auf einem Stab 13 verzichtet werden.

Die Figur 5 zeigt ein weiteres Ausführungsbeispiel eines Erodiersegments 7, bei dem die einzelnen Erodiersegmente 7 wiederum miteinander verbunden werden, hier insbesondere durch Gewinde 31, 31'.
Das Erodiersegment 7 stellt hier jedoch ein Kompositteil dar, d.h. im Inneren 34 besteht es aus einem Werkzeugstahl, das aus demselben Material besteht wie der Dorn 4 oder wie in Figur 1, 2 beschrieben. Das Metall weist ein entsprechendes Innengewinde 31 auf, um die einzelnen Erodiersegmente 7 miteinander zu verbinden.
Der äußere Anteil 37 des Erodiersegments 7 weist Graphit auf oder besteht vorzugsweise aus Graphit.

Die Erodiersegmente 7 der Figuren 4, 5 können an ihren äußeren radialen Oberfläche ähnlich wie in Figur 3 dargestellt, geformt sein, um wie in Figur 6, 7 erläutert turbulierende innere Oberflächen zu erzeugen.

Der Vorteil des modularen Erodierwerkzeugs 1 besteht darin, dass die Einzelelemente kostengünstiger hergestellt werden können, als wenn eine solche Elektrode aus einem Stück gefertigt werden müsste. Zerbricht nämlich ein solches langes Element, was bei Graphit oft der Fall ist, so kann das gesamte Werkzeug nicht mehr verwendet werden.
Je nachdem, wie weit die modulare Erodierelektrode in eine Bohrung eingeführt wurde oder je nach Verschleiß, können die einzelnen Erodierelemente 7 ausgetauscht werden, ohne dass alle Erodierelemente 7 ausgetauscht werden müssten.

Außerdem wird die Stabilität des Erodierwerkzeugs aufgrund des Führungsdorns wesentlich erhöht im Vergleich zu einer Vollmaterialelektrode.

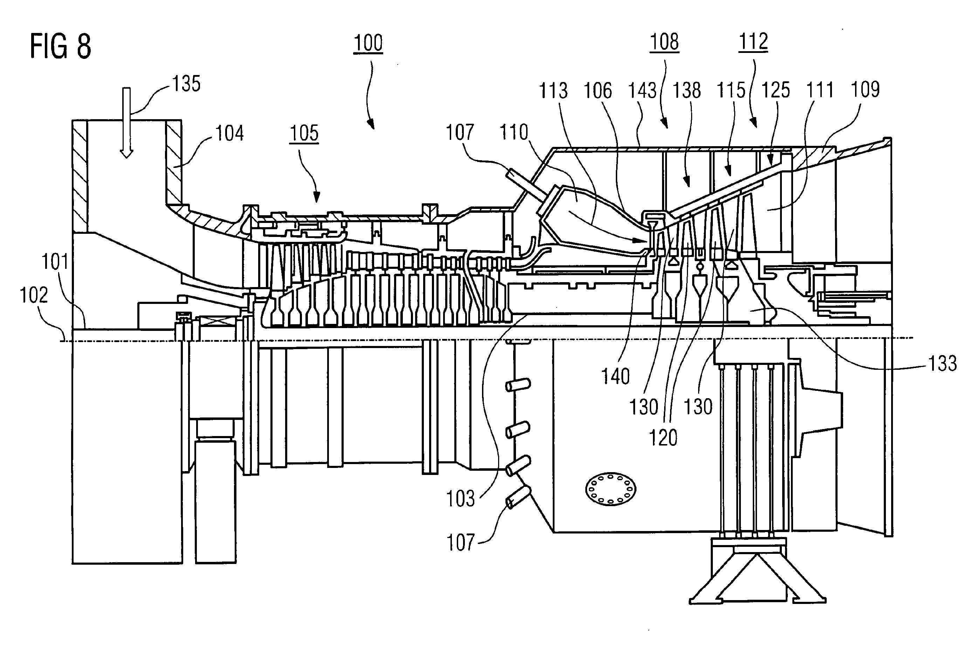

Die Figur 8 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur). Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

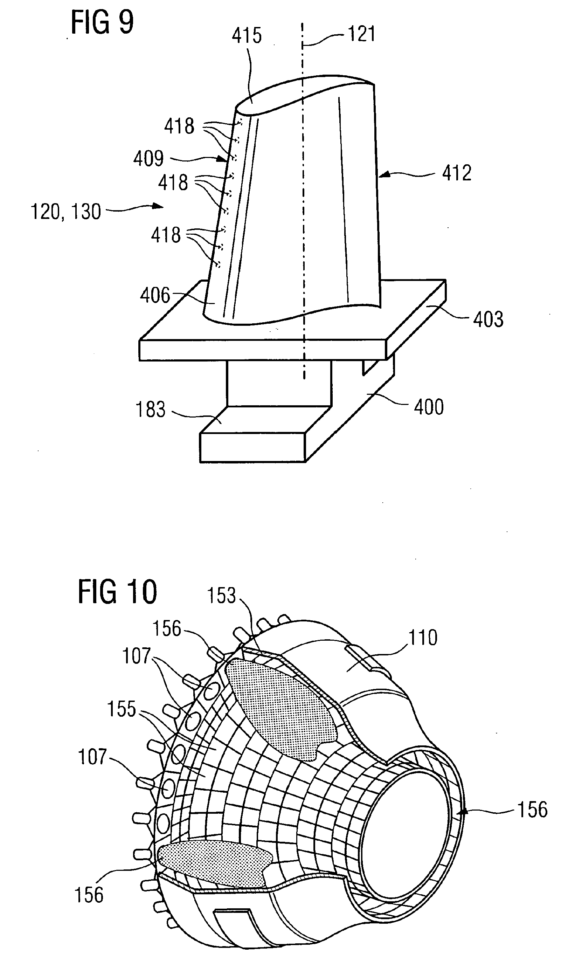

Die Figur 9 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt). Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet. Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind. Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen. Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrA1X; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.
Die Dichte liegt vorzugsweise bei 95% der theoretischen Dichte.
Auf der MCrA1X-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10A1-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrA1X-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 10 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Modular aufgebaute Erodierelektrode (1),
umfassend mehrere separat montierte Erodiersegmente (7).

2. Erodierelektrode (1) nach Anspruch 1,
die einen separaten Stab (13) zur Aufnahme der einzelnen Erodiersegmente (7) aufweist.

3. Erodierelektrode nach Anspruch 1 oder 2,
die einen Dorn (4) als Teil der Erodierelektrode (1) aufweist,
der die Spitze der Erodierelektrode (1) darstellt.

4. Erodierelektrode nach Anspruch 3,
bei der der Dorn (4) einen Teil des Stabs (13) bildet.

5. Erodierelektrode nach Anspruch 3 oder 4,
die ein Erodiersegment (7) aufweist,
das zur Auflage auf den Dorn (4) kommt.

6. Erodierelektrode nach Anspruch 1, 2, 3 oder 5,
bei der die einzelnen Erodiersegmente (7) miteinander verbunden werden, insbesondere verschraubt werden.

7. Erodierelektrode nach Anspruch 1, 2, 5 oder 6,
bei der die Erodiersegmente (7) längs einer Längsachse symmetrisch,
insbesondere kreissymmetrisch,
ausgebildet sind.

8. Erodierelektrode nach Anspruch 1, 2, 5, 6 oder 7,
bei dem das Erodiersegment (7) zwei Scheiben (8, 9) mit zwei verschiedenen Außendurchmessern aufweist,
wobei die Scheiben (8, 9) insbesondere zusammen ein Teil bilden.

9. Erodierelektrode nach Anspruch 2, 3, 4, 5, 7 oder 8,
bei dem die Erodiersegmente (7) auf dem Stab (13) fest gespannt sind,
insbesondere durch eine Spannmutter (10).

10. Erodierelektrode nach Anspruch 3, 4 oder 5,
bei dem der Dorn (4) aus einem Werkzeugstahl besteht.

11. Erodierelektrode nach einem oder mehreren der vorherigen Ansprüchen,
bei dem das Erodiersegment (7) Graphit aufweist.

12. Erodierelektrode nach Anspruch 1, 2, 5, 6, 7, 8, 9 oder 10,
bei dem das Erodiersegment (7) aus Graphit besteht.

13. Erodierelektrode nach Anspruch 1 oder 6,
bei dem das Erodiersegment (7) Werkzeugstahl und Graphit aufweist, insbesondere aus einem Werkzeugstahl und Graphit besteht.

14. Erodierelektrode nach einem oder mehreren der vorherigen Ansprüchen,
die (1) bis zu 40 Erodiersegmente (7),
insbesondere 35 bis 40 Elemente aufweist.

15. Verwendung eines modularen Erodierwerkzeugs (1) nach einem oder mehreren der Ansprüche 1 bis 14,
zum Senkerodieren eines Bauteils (120, 130, 155), insbesondere von turbulierenden Kühlluftbohrungen (418) einer Turbinenschaufel (120, 130).
